(19) Europäisches Patentamt
European Patent Office
Office européen des brevets

(11) **EP 4 583 398 A1**

(12) **EUROPEAN PATENT APPLICATION**
published in accordance with Art. 153(4) EPC

(43) Date of publication:
**09.07.2025 Bulletin 2025/28**

(21) Application number: **23860023.3**

(22) Date of filing: **14.08.2023**

(51) International Patent Classification (IPC):
**H02P 21/14** (2016.01)   **H02P 27/06** (2006.01)

(52) Cooperative Patent Classification (CPC):
**H02P 21/14; H02P 27/06**

(86) International application number:
**PCT/JP2023/029412**

(87) International publication number:
**WO 2024/048258 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022138681**

(71) Applicant: **Fujitsu General Limited Kawasaki-shi, Kanagawa 213-8502 (JP)**

(72) Inventor: **OSADA, Yudai Kawasaki-shi, Kanagawa 213-8502 (JP)**

(74) Representative: **TBK Bavariaring 4-6 80336 München (DE)**

(54) **MOTOR CONTROL DEVICE**

(57)     In a motor control device (100), an inverter (10) is configured to convert a direct-current voltage supplied from a direct-current power supply into an alternating-current voltage, and apply the converted alternating-current voltage to a motor (M), a current detector (21) detects a bus current of the inverter (10) by using a shunt resistance (Rs) connected between the direct-current power supply and the inverter, a 3φ current calculator (61) calculates a motor current flowing through the motor (M) based on the bus current, a first extraction unit (91) extracts a noise component included in the motor current from the motor current, and a noise amount determining unit (92) determines a magnitude of a noise in the bus current based on the extracted noise component.

FIG.1

EP 4 583 398 A1

**Description**

[Technical Field]

The present disclosure relates to a motor control device.

[Background Art]

A motor control device, which is configured to control driving of a motor, includes an inverter that generates three-phase alternating-current voltages (hereinafter, may be referred to as "three-phase voltages") to be applied to the motor. The inverter is constituted of a plurality of switching elements.

In a case where a vector control is used with respect to a motor control device, the motor control device generates a d-axis current command value and a q-axis current command value such that a rotational velocity of a motor coincides with a velocity command value (namely, target velocity), and further generates a d-axis voltage command value and a q-axis voltage command value from the d-axis current command value and the q-axis current command value. Furthermore, the motor control device converts the d-axis voltage command value and the q-axis voltage command value into three-phase voltage command values.

Pulse Width Modulation (PWM) has been known as a technology for controlling an inverter on the basis of three-phase voltage command values. PWM is a technology for adjusting lengths of ON/OFF time intervals of a plurality of switching elements constituting the inverter so as to change output voltages (in other words, three-phase voltages) of the inverter. A signal (hereinafter, may be referred to as "PWM signal") for controlling ON/OFF of a switching element is generated on the basis of a comparison result between a carrier, which is a carrier wave of PWM, and a modulation wave. ON/OFF of switching elements is controlled in accordance with the PWM signal, and thus three-phase voltages are applied to a motor so as to control driving of the motor.

There has been known a technology (hereinafter, may be referred to as "positional sensor-less method") for controlling driving of a motor without using a sensor (hereinafter, may be referred to as "positional sensor") that detects a rotational position (hereinafter, may be referred to as "rotor position") of a rotor of a motor. In the positional sensor-less method, three-phase currents (hereinafter, may be referred to as "motor currents") flowing through a motor are detected so as to estimate a rotor position without using a positional sensor.

Moreover, an "one-shunt detecting method" has been known as a detection method of a motor current. In the one-shunt detecting method, on the basis of a bus current flowing between an inverter, which generates three-phase voltages, and a direct-current power supply; currents corresponding to two phases of motor currents are detected, and a current corresponding to the remaining one phase is calculated by using Kirchhoff's laws based on the currents corresponding to the two phases.

Herein, there has been proposed a related technology for arranging a first connection line, which transmits, to a first A/D convertor, an amplified voltage obtained by amplifying a voltage generated between both ends of a shunt resistance for detecting a bus current, and a second connection line, which transmits an offset voltage generated by an offset voltage generating unit to a second A/D convertor, so as to evenly receive effects due to a noise. In the above-mentioned related technology, in a case where a noise is superposed on the first connection line, the same noise is superposed on the second connection line, and thus whether or not an offset voltage is a voltage out of a predetermined range is determined so as to execute determination (hereinafter, may be referred to as "noise determination") of whether or not a large noise is superposed on a bus current. In the above-mentioned related technology, in a case where an offset voltage is a voltage out of a predetermined range, effects due to a noise applied to a detected bus current are determined to be large, so as to discard an amplified voltage that is simultaneously detected with the offset voltage; and in a case where an offset voltage is within the predetermined range, a PWM signal is generated on the basis of a bus current that is calculated based on an amplified voltage simultaneously detected with the offset voltage. In this way, it is possible to control a motor by using a current value (in other words, current value having high accuracy) whose effects due to a noise are small, and further to prevent destabilization in controlling due to a motor executing controlling by using a current value whose effects due to a noise are large.

[Citation List]

[Patent Citation]

Patent Literature 1: Japanese Laid-open Patent Publication No. 2015-126555 A

[Summary of Invention]

[Technical Problem]

In the above-mentioned related technology, in executing noise determination, an offset voltage is necessarily sampled simultaneously with sampling of an amplified voltage, and thus a second connection line and a second A/D convertor for acquiring the offset voltage become additionally requested. Thus, in the above-mentioned related technology, the number of components in a motor control device increases in executing controlling on the motor by using a current value having high accuracy.

Thus, in the present disclosure, there is proposed a technology that is capable of controlling a motor by using a current value having high accuracy while suppressing increase in the number of components in a motor control device.

[Solution to Problem]

A motor control device according to the present disclosure includes an inverter, a detection unit, a calculation unit, a first extraction unit, and a determination unit. The inverter is configured to: convert a direct-current voltage supplied from a direct-current power supply into an alternating-current voltage; and apply the alternating-current voltage to a motor. The detection unit detects a bus current of the inverter by using a resistance connected between the direct-current power supply and the inverter. The calculation unit calculates a motor current flowing through the motor based on the bus current. The first extraction unit extracts a noise component included in the motor current from the motor current. The determination unit determines a magnitude of a noise in the bus current based on the noise component.

[Advantageous Effects of Invention]

According to a disclosed technology, it is possible to control a motor by using a current value having high accuracy while suppressing increase in the number of components in a motor control device.

[Brief Description of Drawings]

[Fig. 1] FIG. 1 is a diagram illustrating a configuration example of a motor control device according to a first embodiment of the present disclosure.
[Fig. 2] is a diagram illustrating a configuration example of a noise determining unit according to the first embodiment of the present disclosure.
[Fig. 3] is a diagram illustrating a configuration example of a first extraction unit according to the first embodiment of the present disclosure.
[Fig. 4] is a diagram illustrating examples of a noise component and a non-noise component that are included in a motor current according to the first embodiment of the present disclosure.
[Fig. 5] is a diagram illustrating one example of an extracted noise component according to the first embodiment of the present disclosure.
[Fig. 6] is a diagram illustrating an update example of a threshold to be used in noise determination according to the first embodiment of the present disclosure.
[Fig. 7] is a diagram illustrating a configuration example of a noise determining unit according to a second embodiment of the present disclosure.
[Fig. 8] is a diagram illustrating configuration examples of a first extraction unit and a second extraction unit according to the second embodiment of the present disclosure.
[Fig. 9] is a flowchart illustrating one example of a processing procedure to be executed in the noise determining unit according to the second embodiment of the present disclosure.

[Embodiments for Carrying Out the Invention]

Hereinafter, embodiments according to the present disclosure will be explained on the basis of accompanying drawings. In the following embodiments, the same configuration is provided with the same reference symbol.

[First Embodiment]

<Configuration of Motor Control Device>

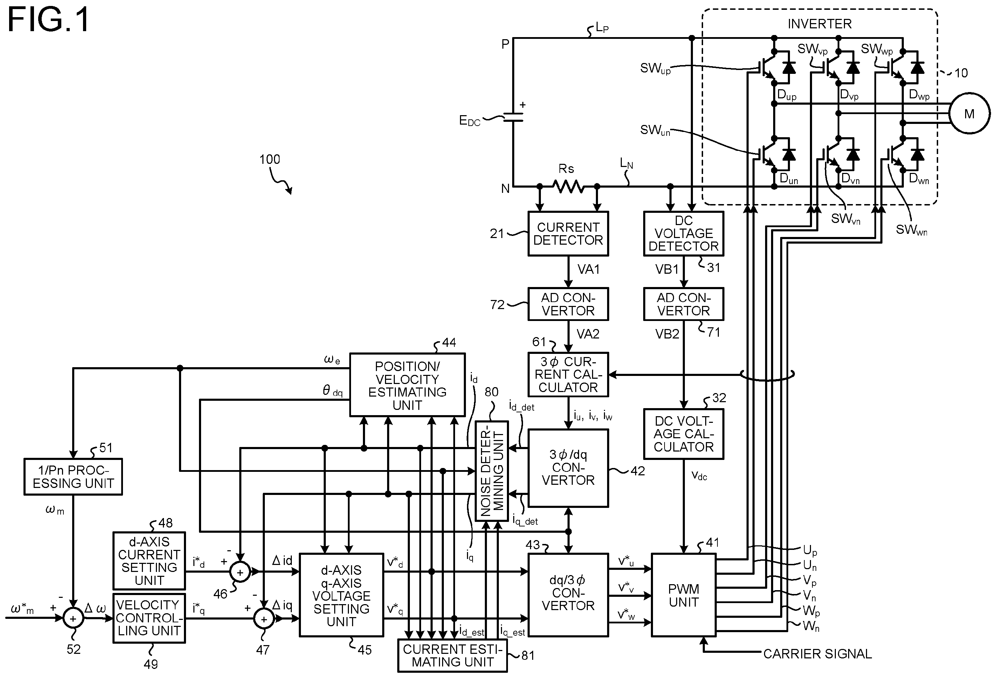

FIG. 1 is a diagram illustrating a configuration example of a motor control device according to a first embodiment of the present disclosure. A motor control device 100 illustrated in FIG. 1 controls driving of a motor M with the use of a positional sensor-less method, a one-shunt detecting method, and PWM control. In FIG. 1, the motor control device 100 includes subtraction units 46, 47, and 52, a d-axis current setting unit 48, a velocity controlling unit 49, a d-axis q-axis voltage setting unit 45, a dq/3φ convertor 43, a PWM unit 41, an inverter 10, a direct-current power supply $E_{DC}$, and a shunt resistance Rs. The motor control device 100 includes a DC voltage detector 31, a current detector 21, AD convertors 71 and 72, a 3φ current calculator 61, a DC voltage calculator 32, a 3φ/dq convertor 42, a position/velocity estimating unit 44, a 1/Pn processing unit 51, a noise determining unit 80, and a current estimating unit 81.

The subtraction units 46, 47, and 52, the d-axis current setting unit 48, the velocity controlling unit 49, the d-axis q-axis voltage setting unit 45, the dq/3φ convertor 43, the PWM unit 41, the DC voltage detector 31, the current detector 21, the AD convertors 71 and 72, the 3φ current calculator 61, the DC voltage calculator 32, the 3φ/dq convertor 42, the position/velocity estimating unit 44, the 1/Pn processing unit 51, the noise determining unit 80, and the current estimating unit 81 are realized by a Micro Control Unit (MCU) as hardware, for example.

The inverter 10 includes switching elements SWup, SWvp, and SWwp arranged on an upper arm, and switching elements SWun, SWvn, and SWwn arranged on a lower arm.

In the motor control device 100, the d-axis current setting unit 48 outputs a d-axis current command value id* having a predetermined value to the subtraction unit 46.

Into the subtraction unit 46, a d-axis current command value id* is input from the d-axis current setting unit 48, and further a d-axis current id is input from the noise determining unit 80. The subtraction unit 46 subtracts a d-axis current id from a d-axis current command value id* so as to calculate a d-axis current deviation Δid, and further outputs the calculated d-axis current deviation Δid to the d-axis q-axis voltage setting unit 45.

The velocity controlling unit 49 calculates a q-axis current command value iq* such that a velocity deviation Δω input from the subtraction unit 52 approaches zero, and further outputs the calculated q-axis current command value iq* to the subtraction unit 47.

Into the subtraction unit 47, a q-axis current command value iq* is input from the velocity controlling unit 49, and further a q-axis current iq is input from the noise determining unit 80. The subtraction unit 47 subtracts a q-axis current iq from a q-axis current command value iq* so as to calculate a q-axis current deviation Δiq, and further outputs the calculated q-axis current deviation Δiq to the d-axis q-axis voltage setting unit 45.

Into the d-axis q-axis voltage setting unit 45, a d-axis current deviation Δid is input from the subtraction unit 46, a q-axis current deviation Δiq is input from the subtraction unit 47, and further a d-axis current id and a q-axis current iq are input from the noise determining unit 80. The d-axis q-axis voltage setting unit 45 calculates a d-axis voltage command value Vd* and a q-axis voltage command value Vq* such that a d-axis current deviation Δid and a q-axis current deviation Δiq approach zero, and further outputs the calculated d-axis voltage command value Vd* and the calculated q-axis voltage command value Vq* to the position/velocity estimating unit 44, the dq/3φ convertor 43, and the current estimating unit 81. The d-axis voltage command value Vd* and the q-axis voltage command value Vq* also change in accordance with a u-phase current iu, a v-phase current iv, and a w-phase current iw that are motor currents calculated by the 3φ current calculator 61.

Into the position/velocity estimating unit 44, a d-axis current id and a q-axis current iq are input from the noise determining unit 80, and further a d-axis voltage command value Vd* and a q-axis voltage command value Vq* are input from the d-axis q-axis voltage setting unit 45. The position/velocity estimating unit 44 estimates an electric angular velocity ωe of the motor M and a rotational phase angle θdq of the motor M in a dq rotation coordinate (namely, dq coordinate) on the basis of a d-axis current id, a q-axis current iq, a d-axis voltage command value Vd*, and a q-axis voltage command value Vq*. The position/velocity estimating unit 44 outputs the estimated angular velocity ωe to the 1/Pn processing unit 51, the noise determining unit 80, and the current estimating unit 81; and further outputs the estimated rotational phase angle θdq to the 3φ/dq convertor 42 and the dq/3φ convertor 43.

The 1/Pn processing unit 51 divides an angular velocity ωe by the number of pole pairs of the motor M so as to convert an electric angular velocity ωe into a mechanical angular velocity ωm of a rotor included in the motor M, and further outputs the converted angular velocity ωm to the subtraction unit 52.

Into the subtraction unit 52, an angular velocity ωm is input from the 1/Pn processing unit 51, and further a velocity command value ωm* is input from the outside of the motor control device 100 (for example, upper-level controller of motor control device 100). The subtraction unit 52 subtracts an angular velocity ωm from a velocity command value ωm* so as to calculate a velocity deviation Δω, and further outputs the calculated velocity deviation Δω to the velocity controlling unit 49.

By using a rotational phase angle θdq, the dq/3φ convertor 43 converts a d-axis voltage command value Vd* and a q-axis voltage command value Vq* of two phases in a dq rotation coordinate into three-phase voltage command values Vu*, Vv*, and Vw* in a fixed coordinate (namely, UVW coordinate). The dq/3φ convertor 43 outputs converted voltage command values Vu*, Vv*, and Vw* to the PWM unit 41.

Into the PWM unit 41, voltage command values Vu*, Vv*, Vw* are input from the dq/3φ convertor 43, and further a DC voltage Vdc is input from the DC voltage calculator 32. Into the PWM unit 41, a carrier signal is input from the outside of the motor control device 100 (for example, from upper-level controller of motor control device 100), which is a carrier wave of PWM. The PWM unit 41 generates three-phase PWM signals Up, Un, Vp, Vn, Wp, and Wn on the basis of voltage command values Vu*, Vv*, Vw* and, a DC voltage Vdc, and a carrier signal, and further outputs the generated PWM signals Up, Un, Vp, Vn, Wp, and Wn to the inverter 10 and the 3φ current calculator 61.

To the inverter 10, a direct-current voltage is supplied from the direct-current power supply $E_{DC}$, and further PWM signals Up, Un, Vp, Vn, Wp, and Wn are input from the PWM unit 41. The inverter 10 converts the direct-current voltage supplied from the direct-current power supply $E_{DC}$ into an AC voltage in accordance with PWM signals Up to Wn, and further applies the converted three-phase AC voltages to the motor M. In other words, the inverter 10 applies an AC voltage to the motor M by PWM control. Three-phase AC voltages are applied to the motor M so as to drive the motor M. In the inverter 10, the switching elements SWup, SWun, SWvp, SWvn, SWwp, and SWwn are respectively turned ON/OFF in accordance with PWM signals Up, Un, Vp, Vn, Wp, and Wn so that a direct-current voltage is converted into three-phase voltages. Free wheel diodes Dup, Dun, Dvp, Dvn, Dwp, and Dwn are connected to both ends of the respective switching elements SWup, SWun, SWvp, SWvn, SWwp, and SWwn.

The current detector 21 detects a bus current Is of the inverter 10 by using the shunt resistance Rs that is connected between the direct-current power supply $E_{DC}$ and the inverter 10. The shunt resistance Rs is arranged on an N-line $L_N$ that is a DC line between an N-side terminal in the direct-current power supply $E_{DC}$ and the inverter 10. Note that the shunt resistance Rs may be arranged on a P-line $L_P$ that is a DC line between a P-side terminal in the direct-current power supply $E_{DC}$ and the inverter 10. A bus current Is according to a u-phase current, a v-phase current, and a w-phase current, which are motor currents flowing in accordance with a PWM signal, flows through the shunt resistance Rs; and in a case where the bus current Is flows through the shunt resistance Rs, a voltage drop is generated between both ends of the shunt resistance Rs. The current detector 21 detects the bus current Is flowing through the shunt resistance Rs on the basis of a magnitude of the above-mentioned voltage drop and a resistance value of the shunt resistance Rs. Moreover, the current detector 21 calculates an analog voltage VA1 expressed by Expression (1) on the basis of the shunt resistance Rs and a bus current Is, and further outputs the calculated analog voltage VA1 to the AD convertor 72. A predetermined amplification factor is indicated by "k" in Expression (1).

$$VA1 = k \times (Rs \cdot Is) \qquad\qquad (1)$$

The AD convertor 72 samples an analog voltage VA1 so as to convert the analog voltage VA1 into a digital voltage value VA2, and further outputs the converted digital voltage value VA2 to the 3φ current calculator 61.

The 3φ current calculator 61 calculates a motor current by using a one-shunt detecting method. The 3φ current calculator 61 calculates a u-phase current iu, a v-phase current iv, and a w-phase current iw that are motor currents on the basis of a resistance value of the shunt resistance Rs, an amplification factor k, a digital voltage value VA2, and PWM signals Up to Wn; and further outputs the calculated motor current iu, iv, and iw to the 3φ/dq convertor 42.

By using a rotational phase angle θdq input from the position/velocity estimating unit 44, the 3φ/dq convertor 42 converts motor currents iu, iv, and iw indicating three-phase current vectors in a fixed coordinate into a d-axis current and a q-axis current indicating two-phase current vectors of a dq rotation coordinate. Hereinafter, a d-axis current converted by the 3φ/dq convertor 42 may be referred to as "detected d-axis current", and further a q-axis current converted by the 3φ/dq convertor 42 may be referred to as "detected q-axis current". Two-phase detected d-axis current and detected q-axis current correspond to three-phase motor currents calculated by the 3φ current calculator 61. The 3φ/dq convertor 42 outputs a detected d-axis current id_det and a detected q-axis current iq_det to the noise determining unit 80. Hereinafter, the detected d-axis current id_det and the detected q-axis current iq_det may be comprehensively referred to as "detected currents i_det".

Into the current estimating unit 81, a d-axis voltage command value Vd* and a q-axis voltage command value Vq* are input from the d-axis q-axis voltage setting unit 45, an angular velocity ωe is input from the position/velocity estimating unit 44, and a d-axis current id and a q-axis current iq are input from the noise determining unit 80. The current estimating unit 81 estimates current on the basis of a d-axis voltage command value Vd*, a q-axis voltage command value Vq*, an angular velocity ωe, a d-axis current id, and a q-axis current iq; and further outputs the estimated d-axis current id_est, and the estimated q-axis current iq_est to the noise determining unit 80. Hereinafter, a d-axis current estimated by the current estimating unit 81 may be referred to as "estimated d-axis current", and further a q-axis current estimated by the current estimating unit 81 may be referred to as "estimated q-axis current". Hereinafter, the estimated d-axis current id_est and the estimated q-axis current iq_est may be comprehensively referred to as "estimated currents i_est".

Into the noise determining unit 80, a detected current i_det is input from the 3φ/dq convertor 42, an angular velocity ωe is input from the position/velocity estimating unit 44, and an estimated current i_est is input from the current estimating unit 81. The noise determining unit 80 executes noise determination so as to decide, on the basis of a determination result of noise determination, a d-axis current id to be output to the position/velocity estimating unit 44, the d-axis q-axis voltage setting unit 45, the subtraction unit 46, and the current estimating unit 81; and a q-axis current iq to be output to the position/velocity estimating unit 44, the d-axis q-axis voltage setting unit 45, the subtraction unit 47, and the current estimating unit 81. Details of the noise determining unit 80 will be mentioned later.

The DC voltage detector 31 detects a bus voltage between the P-line $L_P$ and the N-line $L_N$, and further outputs the detected analog bus voltage VB1 to the AD convertor 71.

The AD convertor 71 samples an analog bus voltage VB1 so as to convert the analog bus voltage VB1 into a digital bus current value VB2, and further outputs the converted digital bus current value VB2 to the DC voltage calculator 32.

The DC voltage calculator 32 calculates a DC voltage Vdc on the basis of the digital bus current value VB2, and further outputs the calculated DC voltage Vdc to the PWM unit 41.

<Configuration of Noise Determining Unit>

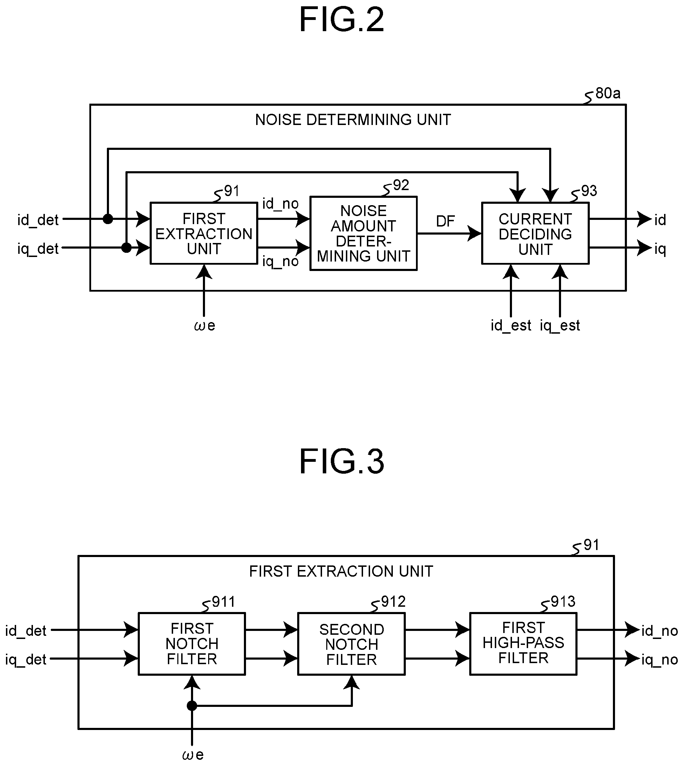

FIG. 2 is a diagram illustrating a configuration example of a noise determining unit according to the first embodiment of the present disclosure. A noise determining unit 80a illustrated in FIG. 2 corresponds to the noise determining unit 80 illustrated in FIG. 1. In FIG. 2, the noise determining unit 80a includes a first extraction unit 91, a noise amount determining unit 92, and a current deciding unit 93.

The first extraction unit 91 extracts a noise component included in a motor current from a motor current, and further outputs the extracted noise component to the noise amount determining unit 92. The noise component extracted by the first extraction unit 91 is formed of a d-axis noise component id_no and a q-axis noise component iq_no. Hereinafter, the d-axis noise component id_no and the q-axis noise component iq_no may be comprehensively referred to as "noise components i_no".

The noise amount determining unit 92 determines a magnitude of a noise in a bus current on the basis of a noise component. The noise component may be a positive value or a negative value in some cases. Thus, for example, in a case where at least one of an absolute value |id_no| of a d-axis noise component id_no or an absolute value |iq_no| of a q-axis noise component iq_no is equal to or more than an absolute value |±THN| of a threshold ±THN, the noise amount determining unit 92 determines that a noise of a bus current is large, and in a case where both of |id_no| and |iq_no| are less than |±THN|, the noise amount determining unit 92 determines that a noise of the bus current is small. In a case where a noise of a bus current is determined to be large and a noise component includes a positive value, the noise amount determining unit 92 sets a determining flag DF to '+1', and further outputs the determining flag DF, which is set to '+1', to the current deciding unit 93. On the other hand, in a case where a noise of a bus current is determined to be large and a noise component includes a negative value, the noise amount determining unit 92 sets a determining flag DF to '-1', and further outputs the determining flag DF, which is set to '-1', to the current deciding unit 93. In a case where a noise of a bus current is determined to be small, the noise amount determining unit 92 sets a determining flag DF to '0', and further outputs the determining flag DF, which is set to '0', to the current deciding unit 93.

Into the current deciding unit 93, a detected current i_det is input from the 3φ/dq convertor 42, an estimated current i_est is input from the current estimating unit 81, and a determining flag DF is input from the noise amount determining unit 92.

In a case where a determining flag DF is set to '0', the current deciding unit 93 decides a detected d-axis current id_det as a d-axis current id to be used in controlling the motor M during the present carrier period, and further outputs the detected d-axis current id_det, from among the detected d-axis current id_det and the estimated d-axis current id_est, to the position/velocity estimating unit 44, the d-axis q-axis voltage setting unit 45, the subtraction unit 46, and the current estimating unit 81. A carrier period is a reciprocal of a carrier frequency fc in the motor control device 100. On the other hand, in a case where a determining flag DF is set to '+1' or '-1', the current deciding unit 93 decides an estimated d-axis current id_est as a d-axis current id to be used in controlling the motor M during the present carrier period, and further outputs the estimated d-axis current id_est, from among the detected d-axis current id_det and the estimated d-axis current id_est, to the position/velocity estimating unit 44, the d-axis q-axis voltage setting unit 45, the subtraction unit 46, and the current estimating unit 81.

In a case where a determining flag DF is set to '0', the current deciding unit 93 decides a detected q-axis current iq_det as a q-axis current iq to be used in controlling the motor M during the present carrier period, and further outputs the detected q-axis current iq_det, from among the detected q-axis current iq_det and the estimated q-axis current iq_est, to the position/velocity estimating unit 44, the d-axis q-axis voltage setting unit 45, the subtraction unit 47, and the current estimating unit 81. On the other hand, in a case where a determining flag DF is set to '+1' or '-1', the current deciding unit 93 decides an estimated q-axis current iq_est as a q-axis current iq to be used in controlling the motor M during the present carrier period, and further outputs the estimated q-axis current iq_est, from among the detected q-axis current iq_det and the estimated q-axis current iq_est, to the position/velocity estimating unit 44, the d-axis q-axis voltage setting unit 45, the subtraction unit 47, and the current estimating unit 81.

<Estimation of Current>

Hereinafter, two estimation examples of Estimation example 1 and Estimation example 2 will be explained as examples of estimation of current to be executed by the current estimating unit 81.

<Estimation Example 1>

A d-axis voltage command value Vd* and a q-axis voltage command value Vq* that are input to the current estimating unit 81 from the d-axis q-axis voltage setting unit 45 are expressed by motor model expressions indicated in Expression (2.1) and Expression (2.2). In Expression (2.1) and Expression (2.2), "R" indicates a winding resistance of the motor M, "id" indicates a d-axis current (hereinafter, may be referred to as "last d-axis current") that is input during the last carrier period to the current estimating unit 81 from the current deciding unit 93, "p" indicates a differential operator of (d/dt), "Ld" indicates a d-axis inductance of the motor M, "ωe" indicates an angular velocity that is input to the current estimating unit 81 from the position/velocity estimating unit 44, "Lq" indicates a q-axis inductance of the motor M, "iq" indicates a q-axis current (hereinafter, may be referred to as "last q-axis current") that is input during the last carrier period to the current estimating unit 81 from the current deciding unit 93, and "Ψ" indicates a interlinkage flux of the motor M. The winding resistance R, the d-axis inductance Ld, the q-axis inductance Lq, and the interlinkage flux Ψ are parameters (hereinafter, may be referred to as "motor parameter") that decide features of the motor M.

$$Vd^* = R \cdot id + p \cdot Ld \cdot id - \omega e \cdot Lq \cdot iq \qquad (2.1)$$

$$Vq^* = R \cdot iq + p \cdot Lq \cdot iq$$
$$+ \omega e \cdot Ld \cdot id + \omega e \cdot \Psi \qquad (2.2)$$

In a case where a carrier frequency fc of the motor control device 100 is used, Expression (2.1) and Expression (2.2) can be rearranged into Expression (3.1) and Expression (3.2). In Expression (3.1) and Expression (3.2), "ΔId" indicates an change amount (hereinafter, may be referred to as "d-axis current change amount") of a d-axis current (hereinafter, may be referred to as "estimated d-axis current") with respect to the last d-axis current, which is estimated to be output from the current deciding unit 93 during the present carrier period, and "ΔIq" indicates an change amount (hereinafter, may be referred to as "q-axis current change amount") of a q-axis current (hereinafter, may be referred to as "estimated q-axis current") with respect to the last q-axis current, which is estimated to be output from the current deciding unit 93 during the present carrier period.

$$Vd^* = R \cdot id + Ld \cdot \Delta Id \cdot fc - \omega e \cdot Lq \cdot iq \qquad (3.1)$$

$$Vq^* = R \cdot iq + Lq \cdot \Delta Iq \cdot fc$$
$$+ \omega e \cdot Ld \cdot id + \omega e \cdot \Psi \qquad (3.2)$$

In a case where Expression (3.1) and Expression (3.2) are solved as to a d-axis current change amount and a q-axis current change amount, Expression (4.1) and Expression (4.2) are obtained.

$$\Delta Id = (Vd^* - R \cdot id + \omega e \cdot Lq \cdot iq)$$
$$/ (Ld \cdot fc) \qquad (4.1)$$

$$\Delta Iq = (Vq^* - R \cdot iq - \omega e \cdot Ld \cdot id - \omega e \cdot \Psi)$$
$$/ (Lq \cdot fc) \qquad (4.2)$$

Thus, in Estimation example 1, the current estimating unit 81 calculates an estimated d-axis current id_est and an estimated q-axis current iq_est in accordance with Expression (5.1) and Expression (5.2) by using the last d-axis current id, which is decided by the current deciding unit 93 during the last carrier period and further is input from the current deciding unit 93, and the last q-axis current iq that is decided by the current deciding unit 93 during the last carrier period and further is input from the current deciding unit 93.

$$id\_est = id + \Delta Id \qquad (5.1)$$

$$\text{iq\_est} = \text{iq} + \Delta\text{Iq} \qquad\qquad (5.2)$$

As described above, in Estimation example 1, the current estimating unit 81 calculates an estimated d-axis current id_est and an estimated q-axis current iq_est that are logically derived in accordance with the motor model expressions of the motor M, and further outputs the calculated estimated d-axis current id_est and the calculated estimated q-axis current iq_est to the current deciding unit 93.

<Estimation Example 2>

In Estimation example 2, the current estimating unit 81 uses the last d-axis current as an estimated d-axis current id_est, and further uses the last q-axis current as an estimated q-axis current iq_est.

<Configuration of First Extraction Unit>

FIG. 3 is a diagram illustrating a configuration example of a first extraction unit according to the first embodiment of the present disclosure. In FIG. 3, the first extraction unit 91 includes a first notch filter 911, a second notch filter 912, and a first high-pass filter 913. Into the first notch filter 911, a detected current i_det is input from the 3φ/dq convertor 42, and further an angular velocity ωe is input from the position/velocity estimating unit 44. Into the second notch filter 912, an angular velocity ωe is input from the position/velocity estimating unit 44.

Herein, the detected current i_det includes a noise component and a component (hereinafter, may be referred to as "non-noise component") that is different from the noise component. The first extraction unit 91 removes a non-noise component from a detected current i_det so as to extract a noise component from a detected current i_det, and further outputs the extracted noise component to the noise amount determining unit 92.

Herein, as examples included in the non-noise component, a load pulsation component, a high-frequency component (hereinafter, may be referred to as "motor-structure caused component") caused by a structure of the motor M, and an offset component are given. The load pulsation component is a component due to pulsation of load during a single rotation of the motor M. The motor-structure caused component is a frequency component including a higher harmonic wave component that depends on a rotational velocity of the motor M, such as pulsation due to cogging torque. The offset component corresponds to an average value of a motor current, and further does not include the frequency component.

In the first extraction unit 91, the first notch filter 911 first removes, as a non-noise component, a load pulsation component from a detected current i_det.

A load pulsation component is a frequency component that is generated due to pulsation of load of the motor M, so as to appear at a specific frequency. The frequency at which a load pulsation component appears is changed in accordance with a rotational velocity of the motor M.

Therefore, for example, the first notch filter 911 executes a filtering process on a detected current i_det in accordance with Expressions (6.1) to (6.7) on the basis of a carrier frequency "fc" and a specific frequency "ωn" at which a load pulsation component appears, so as to remove the load pulsation component from the detected current i_det. Thus, a noise component is extracted, which is obtained by removing a load pulsation component from a detected current i_det. The specific frequency ωn, at which a load pulsation component appears, is calculated on the basis of an angular velocity ωe. The first notch filter 911 outputs, to the second notch filter 912, a noise component i_no obtained by removing a load pulsation component from a detected current i_det.

$$y[k] = \frac{1}{D_0}\left(N_2 \times x[k-2] + N_1 \times x[k-1] + N_0 \times x[k] - D_2 \times y[k-2] - D_1 \times y[k-1]\right) \quad \cdots (6.1)$$

$$N_2 = 1 - 2 \times \left(\frac{\omega_n}{2f_c}\right)d\sigma + \left(\frac{\omega_n}{2f_c}\right)^2 \quad \cdots (6.2)$$

$$N_1 = 2 \times \left(\frac{\omega_n}{2f_c}\right)^2 - 2 \quad \cdots (6.3)$$

$$N_0 = 1 + 2 \times \left(\frac{\omega_n}{2f_c}\right)d\sigma + \left(\frac{\omega_n}{2f_c}\right)^2 \quad \cdots (6.4)$$

$$D_2 = 1 - 2 \times \left(\frac{\omega_n}{2f_c}\right) d\sigma + \left(\frac{\omega_n}{2f_c}\right)^2 \quad \cdots (6.5)$$

$$D_1 = 2 \times \left(\frac{\omega_n}{2f_c}\right)^2 - 2 \quad \cdots (6.6)$$

$$D_0 = 1 + 2 \times \left(\frac{\omega_n}{2f_c}\right) d\sigma + \left(\frac{\omega_n}{2f_c}\right)^2 \quad \cdots (6.7)$$

Herein, in Expressions (6.1) to (6.7), "$N_0$", "$N_1$", "$N_2$", "$D_0$", "$D_1$", and "$D_2$" are predetermined filter constants of a notch filter, "d" is a parameter that decides an attenuation amount of the notch filter, and "$\sigma$" is a parameter that decides a width of a frequency band of an attenuation target in the notch filter. In Expressions (6.1) to (6.7), "x" is a detected current i_det, and "y" is a noise component that is extracted by a notch filter. In Expressions (6.1) to (6.7), "[k]" is a present carrier period, "[k-1]" is the last carrier period, and "[k-2]" is the last but one carrier period. Thus, in Expressions (6.1) to (6.7), "x[k]" is a detected current i_det during a present carrier period, "x[k-1]" is a detected current i_det during the last carrier period, "x[k-2]" is a detected current i_det during a last but one carrier period, "y[k]" is a noise component i_no that is extracted during a present carrier period, "y[k-1]" is a noise component i_no that is extracted during the last carrier period, and "y[k-2]" is a noise component i_no that is extracted during the last but one carrier period.

Next, the second notch filter 912 removes, as a non-noise component, a motor-structure caused component from a detected current i_det.

A motor-structure caused component includes a higher harmonic wave component, and a frequency at which the motor-structure caused component appears is decided by the number of poles of the motor M, the number of slots of the motor M, and a rotational velocity of the motor M. For example, in a case where a rotational velocity of the motor M is a frequency of a fundamental wave and the motor M is an X-pole Y-slot motor, a motor-structure caused component appears at a frequency corresponding to the least common multiple of X and Y. Furthermore, a motor-structure caused component appears at a frequency corresponding to the order of a multiple of 1/2, 2, 3, ..., n of the least common multiple of X and Y. For example, in a case where the motor M is a 6-pole 9-slot motor, in addition to an eighteenth order frequency that is the least common multiple of six and nine, a motor-structure caused component appears at a ninth-order frequency that is 1/2 of the least common multiple of six and nine, and $18 \times n$ th order frequencies corresponding to the order of a multiple of 36th-order, 54th-order, ... of the least common multiple of six and nine. Thus, for example, in a case where a rotational velocity of the motor M is 30 [rps], a motor-structure caused component appears at frequencies of 270 [Hz], 540 [Hz], 1080 [Hz], 1620 [Hz], ..., $540 \times n$ [Hz]. As described above, a motor-structure caused component appears at a specific frequency that is decided by a rotational velocity of the motor M.

Therefore, for example, similar to the first notch filter 911, the second notch filter 912 executes a filtering process on a detected current i_det in accordance with Expressions (6.1) to (6.7) on the basis of a carrier frequency "fc" and a specific frequency "$\omega n$" at which a motor-structure caused component appears, so as to remove the motor-structure caused component from the detected current i_det. Thus, a noise component is extracted, which is obtained by removing a motor-structure caused component from a detected current i_det. A specific frequency $\omega n$ at which a motor-structure caused component appears is calculated on the basis of an angular velocity $\omega e$. The second notch filter 912 outputs a noise component i_no to the first high-pass filter 913, which is obtained by removing a motor-structure caused component from a detected current i_det.

Herein, a load pulsation component or a specific frequency $\omega n$ at which a motor-structure caused component appears change depending on a rotational velocity of the motor M, and thus the predetermined filter constants $N_0$, $N_1$, $N_2$, $D_0$, $D_1$, and $D_2$ in Expression (6.1) to (6.7) are decided in accordance with a rotational velocity of the motor M.

Next, the first high-pass filter 913 removes, as a non-noise component, an offset component from a detected current i_det.

For example, the first high-pass filter 913 executes a filtering process on a detected current i_det on the basis of a carrier frequency "fc" in accordance with Expressions (7.1) to (7.6), so as to remove an offset component from the detected current i_det. Thus, a noise component obtained by removing an offset component from a detected current i_det is extracted as "y[k]" in Expression (7.1). The first high-pass filter 913 outputs a noise component i_no to the noise amount determining unit 92, which is obtained by removing an offset component from a detected current i_det. In Expression (7.1) to (7.6), "a1" and "a0" are filter constants that decide features of the first high-pass filter 913.

$$y[k] = (A \times x[k] + B \times x[k-1] + C \times x[k-2] - D \times y[k-1] - E \times y[k-2]) \quad \cdots (7.1)$$

$$A = \frac{4}{4 + 2 \times \left(\frac{a_1}{f_c}\right) + \left(\frac{a_0}{f_c^2}\right)} \quad \cdots (7.2)$$

$$B = \frac{8}{4 + 2 \times \left(\frac{a_1}{f_c}\right) + \left(\frac{a_0}{f_c^2}\right)} \quad \cdots (7.3)$$

$$C = \frac{4}{4 + 2 \times \left(\frac{a_1}{f_c}\right) + \left(\frac{a_0}{f_c^2}\right)} \quad \cdots (7.4)$$

$$D = \frac{-8 + \left(2 * \frac{a_0}{f_c^2}\right)}{4 + 2 \times \left(\frac{a_1}{f_c}\right) + \left(\frac{a_0}{f_c^2}\right)} \quad \cdots (7.5)$$

$$E = \frac{4 - \left(2 * \frac{a_1}{f_c}\right) + \left(\frac{a_0}{f_c^2}\right)}{4 + 2 \times \left(\frac{a_1}{f_c}\right) + \left(\frac{a_0}{f_c^2}\right)} \quad \cdots (7.6)$$

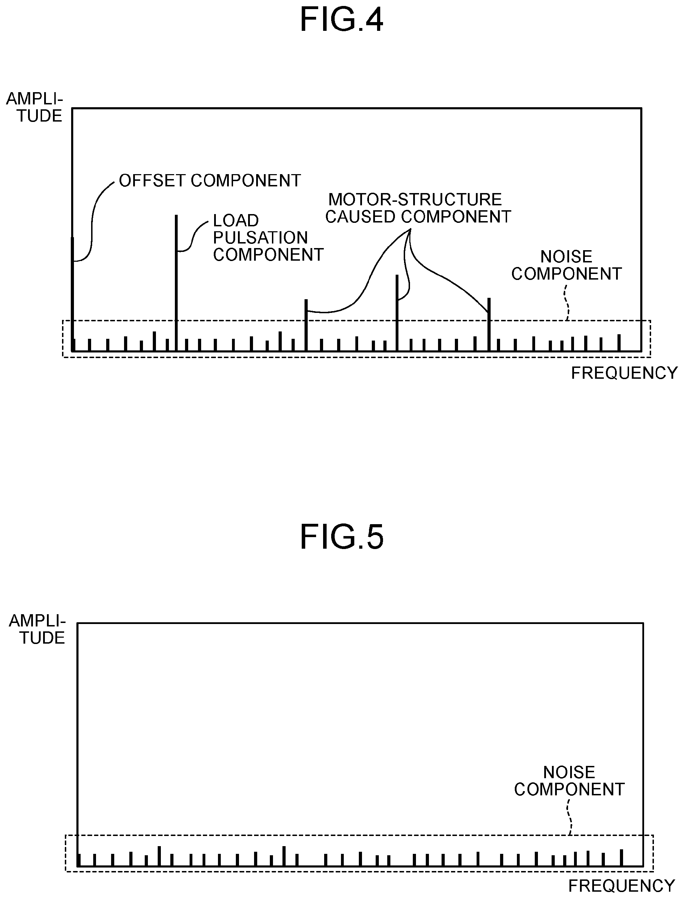

As illustrated in FIG. 4 and FIG. 5, as described above, the first extraction unit 91 removes, as a non-noise component, a load pulsation component, a motor-structure caused component, and an offset component from a detected current i_det, so as to extract a noise component included in a motor current from the motor current. FIG. 4 is a diagram illustrating examples of a noise component and a non-noise component that are included in a motor current according to the first embodiment of the present disclosure, and FIG. 5 is a diagram illustrating one example of an extracted noise component according to the first embodiment of the present disclosure.

Note that the first extraction unit 91 may remove one or more of a load pulsation component, a motor-structure caused component, and an offset component from a detected current i_det. In the above-mentioned, a case is explained where the first extraction unit 91 includes the first notch filter 911, the second notch filter 912, and the first high-pass filter 913 that are second-order filters; however, a filter to which the disclosed technology can be applied is not limited to a second-order filter.

<Update of Threshold ±THN>

Hereinafter, three update examples of Update examples 1 to 3 will be explained as examples of update with respect to a threshold ±THN, which is executed by the noise amount determining unit 92.

<Update Example 1>

In Update example 1, the noise amount determining unit 92 updates a threshold ±THN on the basis of a moving average value of the last n-carrier noise component in a case where determining that a noise in a bus current is small.

<Update Example 2>

In Update example 2, the noise amount determining unit 92 calculates an average value of a noise component in a case where determining, by using a low-pass filter, that a noise in a bus current is small, so as to update a threshold ±THN by the calculated average value.

<Update Example 3>

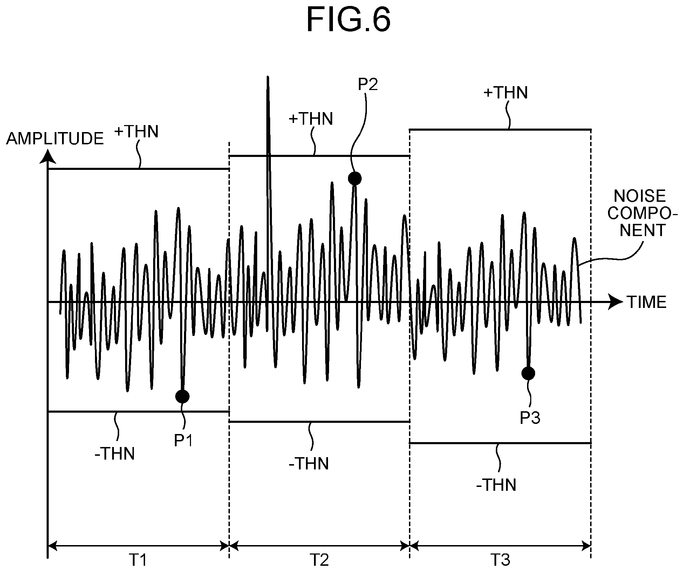

In Update example 3, the noise amount determining unit 92 updates a threshold ±THN on the basis of a noise component in a case where determining that a noise in a bus current is small. FIG. 6 is a diagram illustrating an update example of a threshold to be used in noise determination according to the first embodiment of the present disclosure.
As illustrated in FIG. 6, for example, the noise amount determining unit 92 detects, as needed, positive or negative peak values P1, P2, and P3 are each of whose absolute value of a noise component i_no during a corresponding predetermined time interval Ia is the maximum in a case where determining that a noise in a bus current during the predetermined time interval Ia is small, and further updates a threshold ±THN by using a value obtained by adding a margin to each of the absolute values of the peak values P1, P2, and P3. As illustrated in FIG. 6, for example, in a case where periods T1, T2, and T3 are set each of which includes the same predetermined time interval Ia, the noise amount determining unit 92 detects the negative peak value P1 during the period T1; sets, as a threshold +THN during the period T2, a value obtained by adding a positive margin to a value obtained by providing a positive sign to an absolute value of the peak value P1; and sets, as a threshold -THN during the period T2, a value obtained by adding a negative margin to a value obtained by providing a negative sign to the absolute value of the peak value P1. The noise amount determining unit 92 detects the positive peak value P2 during the period T2; sets, as a threshold +THN during the period T3, a value obtained by adding a positive margin to a value obtained by providing a positive sign to an absolute value of the peak value P2; and sets, as a threshold -THN during the period T3, a value obtained by adding a negative margin to a value obtained by providing a negative sign to the absolute value of the peak value P2. Note that the margin is preliminarily set to a predetermined value that is obtained by experiments and the like so that controlling of the motor M does not become unstable.

Herein, as one example of the predetermined time interval Ia, a "load pulsation period" is given, which is a period during which a load of the motor M pulses in accordance with rotation of the motor M. A peak value of a steady noise, which does not affect the accuracy of a current value, periodically appears at a load pulsation period, and thus in a case where a threshold ±THN is updated at each load pulsation period, it is possible to appropriately set the threshold ±THN. In other words, it is possible to prevent an erroneous determination indicating that a noise in a bus current is large due to a steady noise that does not affect the accuracy of a current value. Furthermore, it is possible to prevent an erroneous determination (erroneous determination indicating that noise is small) indicating that a noise in a bus current is a steady noise even when the noise in the bus current is a large noise. Therefore, it is possible to precisely execute noise determination.

So far, the first embodiment has been explained.

[Second Embodiment]

In a case where a non-periodical one-shot signal such as a noise is input to a second-order filter such as a notch filter, oscillation occurs in an output of the second-order filter. The oscillation that occurs in an output of a second-order filter is larger as a noise input to the second-order filter is larger, and further settling of the oscillation is later as the oscillation is larger. Thus, in a case where the noise amount determining unit 92 determines that a noise in a bus current is large during a present carrier period, there presents possibility that the noise amount determining unit 92 performs an erroneous determination indicating that a noise in the bus current is large even when a noise superposed on the bus current is small during the following carrier periods. Thus, in a second embodiment, the noise determining unit 80 employs the following configuration.

<Configuration of Noise Determining Unit>

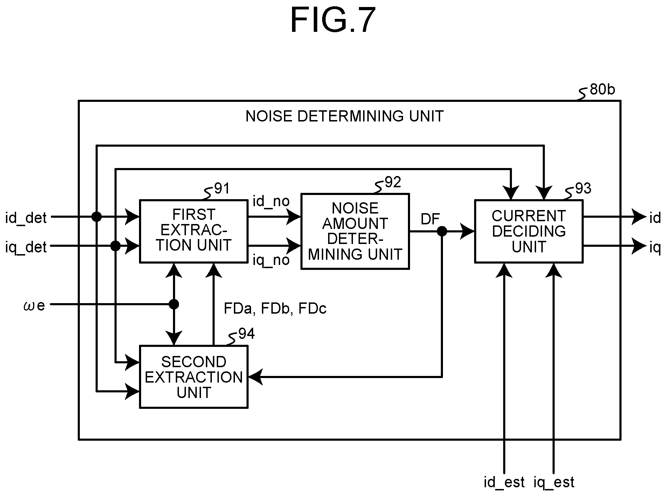

FIG. 7 is a diagram illustrating a configuration example of a noise determining unit according to the second embodiment of the present disclosure. A noise determining unit 80b illustrated in FIG. 7 corresponds to the noise determining unit 80 illustrated in FIG. 1. In FIG. 7, the noise determining unit 80b includes the first extraction unit 91, the noise amount determining unit 92, the current deciding unit 93, and a second extraction unit 94.

<Configurations of First Extraction Unit and Second Extraction Unit>

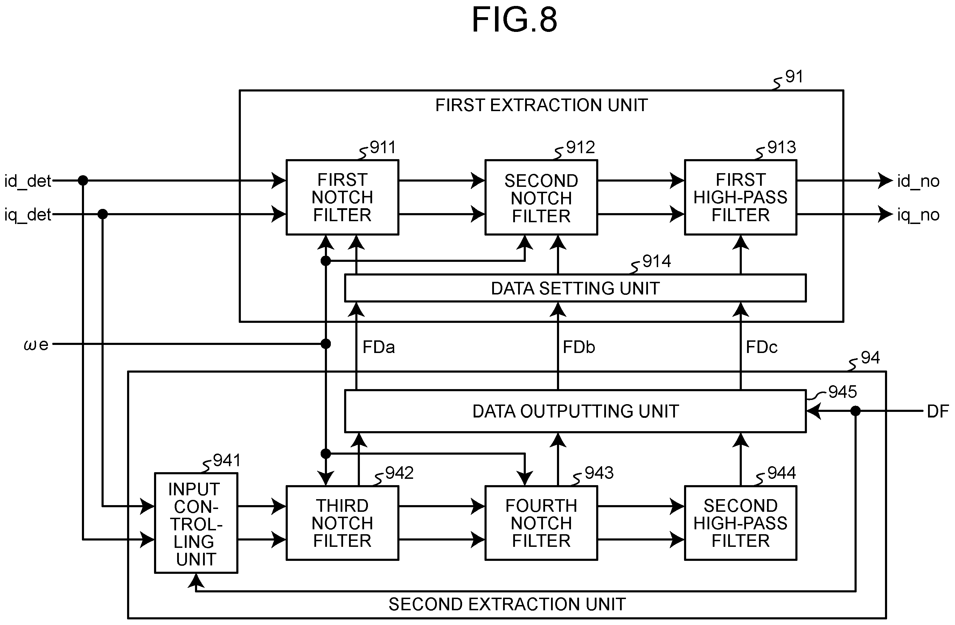

FIG. 8 is a diagram illustrating configuration examples of a first extraction unit and a second extraction unit according to the second embodiment of the present disclosure.

In FIG. 8, the first extraction unit 91 includes the first notch filter 911, the second notch filter 912, the first high-pass filter 913, and a data setting unit 914.

In FIG. 8, the second extraction unit 94 includes an input controlling unit 941, a third notch filter 942, a fourth notch filter 943, a second high-pass filter 944, and a data outputting unit 945. Into the input controlling unit 941, a detected current i_det is input from the $3\varphi$/dq convertor 42, and further a determining flag DF is input from the noise amount determining unit 92. Into the third notch filter 942 and the fourth notch filter 943, an angular velocity $\omega$e is input from the position/velocity estimating unit 44. Into the data outputting unit 945, a determining flag DF is input from the noise amount determining unit 92.

Herein, the third notch filter 942 is a filter having a filter constant that is the same as that of the first notch filter 911, the fourth notch filter 943 is a filter having a filter constant that is the same as that of the second notch filter 912, and the second high-pass filter 944 is a filter having a filter constant that is the same as that of the first high-pass filter 913. In other words, the third notch filter 942 executes a filtering process in accordance with Expressions (6.1) to (6.7) similarly to the first notch filter 911, the fourth notch filter 943 executes a filtering process in accordance with Expressions (6.1) to (6.7) similarly to the second notch filter 912, and the second high-pass filter 944 executes a filtering process in accordance with Expressions (7.1) to (7.6) similarly to the first high-pass filter 913.

<Operation of Noise Determining Unit>

Hereinafter, operation examples of the noise determining unit 80b will be individually explained, which are a case where a noise in a bus current is small and a case where a noise in a bus current is large.

<Case Where Noise in Bus Current is Small>

In a case where the noise amount determining unit 92 determines that a noise in a bus current is small, in other words, in a case where a determining flag DF having been set to '0' is input to the input controlling unit 941 and the data outputting unit 945, the input controlling unit 941 outputs a detected current i_det to the third notch filter 942 as an input with respect to the third notch filter 942. Furthermore, the data outputting unit 945 does not operate, and further filter data FDa, FDb, and FDc are not output from the data outputting unit 945, and thus the data setting unit 914 does not operate either. The first notch filter 911, the second notch filter 912, and the first high-pass filter 913 execute the same filtering processes as those having been explained in the first embodiment. A detected current i_det is input to the third notch filter 942, the third notch filter 942 executes the same filtering process as that of the first notch filter 911, the fourth notch filter 943 executes the same filtering process as that of the second notch filter 912, and the second high-pass filter 944 executes the same filtering process as that of the first high-pass filter 913.

<Case Where Noise in Bus Current is Large>

In a case where the noise amount determining unit 92 determines that a noise in a bus current is large during the last carrier period, in other words, in a case where a determining flag DF having been set to '+1' or '-1' during the last carrier period is input to the input controlling unit 941 and the data outputting unit 945; during the last carrier period, the input controlling unit 941 calculates a current (hereinafter, may be referred to as "virtual motor current") obtained by adding a predetermined additional value to a stored detected current i_det during the last but one carrier period, and further outputs the virtual motor current to the third notch filter 942 as an input with respect to the third notch filter 942. In a case where a determining flag DF having been input during the last carrier period is set to '+1', the input controlling unit 941 adds +a, which is a predetermined additional value, to a detected current i_det during the last but one carrier period, and in a case where a determining flag DF having been input during the last carrier period is set to '-1', the input controlling unit 941 adds -a, which is a predetermined additional value, to a detected current i_det during the last but one carrier period. Note that it is preferable that an absolute value $|\pm a|$ of a predetermined additional value $\pm a$ is smaller than an absolute value $|\pm THN|$ of a threshold $\pm THN$. Oscillation in an output of a second-order filter during a present carrier period is smaller than that during the last carrier period, if an absolute value $|\pm a|$ of a predetermined additional value $\pm a$ is set to be smaller than an absolute value $|\pm THN|$ of a threshold $\pm THN$, oscillation in outputs, which are obtained in filtering processes to be mentioned later executed by the first notch filter 911, the second notch filter 912, and the first high-pass filter 913, is reduced within a range that does not exceed the threshold $\pm THN$ during the present carrier period. In other words, it is possible to obtain a virtual motor current in which effects due to a noise are reduced to the extent that the noise amount determining unit 92 does not execute an erroneous determination indicating that a noise in a bus current is large. The predetermined additional value $\pm a$ may be a variable value that is set in accordance with an updated threshold $\pm THN$. As described above, a predetermined additional value $\pm a$ is added to a detected current i_det when a noise in a bus current is determined to be large, so that it is possible to obtain a virtual motor current in which effects due to a noise are reduced. Note that a detected current i_det is stored in the noise amount determining unit 92 for each carrier period in time series.

In a case where the noise amount determining unit 92 determines that a noise in a bus current is large during the last carrier period, the third notch filter 942 and the fourth notch filter 943 execute filtering processes during the last carrier period in accordance with Expressions (6.1) to (6.7) on the basis of a virtual motor current during the last carrier period, and further the second high-pass filter 944 executes a filtering process in accordance with Expressions (7.1) to (7.6) on the basis of the virtual motor current during the last carrier period. In other words, in a case where the noise amount determining unit 92 determines that a noise in a bus current during the last carrier period is large, the third notch filter 942, the fourth notch filter 943, and the second high-pass filter 944 change, during the last carrier period, "x[k]" in Expressions (6.1) to (6.7) and Expressions (7.1) to (7.6) from a detected current i_det into a virtual motor current so as to execute filtering processes in accordance with Expressions (6.1) to (6.7) and Expressions (7.1) to (7.6) on the basis of a virtual motor current, and further extract a noise component (hereinafter, may be referred to as "virtual noise component") y[k] included in the virtual motor current from the virtual motor current.

In a case where the noise amount determining unit 92 determines that a noise in a bus current is large during the last carrier period; during a present carrier period, the data outputting unit 945 outputs, as filter data FDa, x[k-1] and y[k-1] in the third notch filter 942 to the data setting unit 914, outputs, as filter data FDb, x[k-1] and y[k-1] in the fourth notch filter 943 to the data setting unit 914, and outputs, as filter data FDc, x[k-1] and y[k-1] in the second high-pass filter 944 to the data setting unit 914. During a present carrier period, the data setting unit 914 sets filter data FDa input from the data outputting unit 945 with respect to the first notch filter 911, sets filter data FDb input from the data outputting unit 945 with respect to the second notch filter 912, and sets filter data FDc input from the data outputting unit 945 with respect to the first high-pass filter 913. Thus, during a present carrier period, in the first extraction unit 91, x[k-1] and y[k-1] during the last carrier period are replaced with x[k-1] and y[k-1] that are input from the data outputting unit 945 during the present carrier period, and further filtering processes are executed by the first notch filter 911, the second notch filter 912, and the first high-pass filter 913.

<Processing Procedure in Noise Determining Unit>

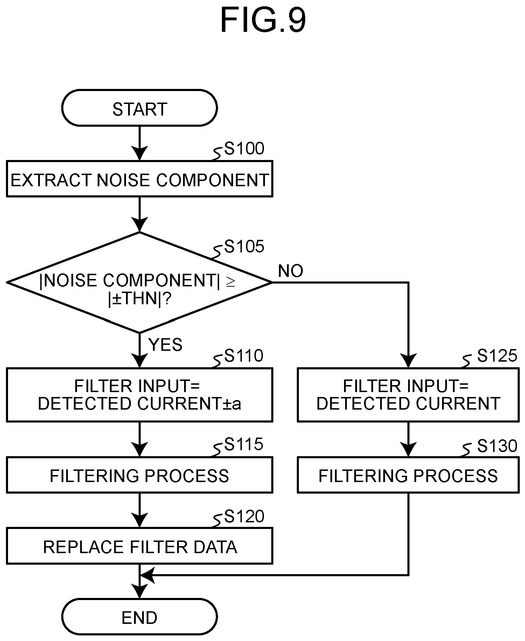

FIG. 9 is a flowchart illustrating one example of a processing procedure to be executed in the noise determining unit according to the second embodiment of the present disclosure.

In FIG. 9, in Step S100, during the last carrier period, the first extraction unit 91 extracts a noise component i_no from a detected current i_det.

Next, in Step S105, during the last carrier period, the noise amount determining unit 92 determines whether or not an absolute value of a noise component i_no is equal to or more than an absolute value of a threshold ±THN, in other words, whether or not a noise in a bus current is large. In a case where a noise in a bus current is determined to be large (Step S105: Yes), the processing is shifted to Step S110, and in a case where a noise in a bus current is determined to be small (Step S105: No), the processing is shifted to Step S125.

In Step S110, the input controlling unit 941 adds a predetermined additional value ±a to a detected current i_det during the last but one carrier period so as to calculate a virtual motor current, and further replaces the detected current i_det with the virtual motor current as an input to the third notch filter 942.

Next, in Step S115, during the last carrier period, the third notch filter 942, the fourth notch filter 943, and the second high-pass filter 944 execute filtering processes on the basis of a virtual motor current during the last carrier period.

Next, in Step S120, during a present carrier period, the data setting unit 914 replaces x[k-1] and y[k-1] in the first notch filter 911, the second notch filter 912, and the first high-pass filter 913 with x[k-1] and y[k-1] in a case where the third notch filter 942, the fourth notch filter 943, and the second high-pass filter 944 execute filtering processes on the basis of a virtual motor current during the last carrier period, and the first notch filter 911, the second notch filter 912, and the first high-pass filter 913 execute filtering processes on a detected current i_det by using the replaced x[k-1] and y[k-1].

On the other hand, in Step S125, the input controlling unit 941 sets a detected current i_det as an input to the third notch filter 942.

Next, in Step S130, the third notch filter 942, the fourth notch filter 943, and the second high-pass filter 944 execute filtering processes on the basis of a detected current i_det.

So far, the second embodiment has been explained.

As described above, a motor control device (namely, motor control device 100 according to embodiments) according to the present disclosure includes an inverter (namely, inverter 10 according to embodiments), a detection unit (namely, current detector 21 according to embodiments), a calculation unit (namely, 3φ current calculator 61 according to embodiments), a first extraction unit (namely, first extraction unit 91 according to embodiments), and a determination unit (namely, noise amount determining unit 92 according to embodiments). The inverter is configured to: convert a direct-current voltage supplied from a direct-current power supply into an alternating-current voltage; and apply the alternating-current voltage to a motor (namely, motor M according to embodiments). The detection unit detects a bus current of the inverter by using a resistance (namely, shunt resistance Rs according to embodiments) connected between the direct-current power supply and the inverter. The calculation unit calculates a motor current flowing through the motor based on the bus current. The first extraction unit extracts a noise component included in the motor current from the motor current. The determination unit determines a magnitude of a noise in the bus current based on the extracted noise component.

In this way, in executing controlling on a motor by using a current value having high accuracy, an offset voltage that is requested in the above-mentioned related technology in order to determine a magnitude of a noise in a bus current becomes unnecessary. Thus, a circuit for acquiring an offset voltage and an A/D convertor for sampling the offset voltage become unnecessary. Therefore, it is possible to execute controlling on a motor by using a current value having high accuracy while avoiding an increase in the number of components in the motor control device. Moreover, the A/D convertor for sampling the offset voltage becomes unnecessary, so that it is possible to use the A/D convertor that is used in sampling the offset voltage for another purpose.

Furthermore, the first extraction unit removes, from the motor current, a non-noise component that is different from the noise component to extract the noise component. For example, the first extraction unit removes as a non-noise component, from the motor current, a frequency component including a higher harmonic wave component that depends on a rotational velocity of the motor to extract a noise component included in the motor current from the motor current. For example, the first extraction unit removes as a non-noise component, from a motor current, a frequency component that is caused by pulsation of load of the motor to extract a noise component included in the motor current from the motor current. For example, the first extraction unit removes as a non-noise component, from a motor current, an offset component that is an average value of the motor current to extract a noise component included in the motor current from the motor current.

In this way, it is possible to precisely extract a noise component.

The determination unit is further configured to: in a case where the noise component is less than a threshold, determine that the noise in the bus current is small; and in a case where the noise component is equal to or more than the threshold, determine that the noise in the bus current is large. The determination unit updates the threshold based on the noise component in a case where determining that the noise in the bus current is small. On the other hand, in a case where determining that the noise in the bus current is large, the determination unit does not update the threshold.

For example, the determination unit updates the threshold on the basis of a peak value of a noise component during a predetermined time interval in a case where determining that a noise in a bus current is small during the predetermined time interval.

For example, the predetermined time interval is a load pulsation period that is a period during which load of the motor pulses in accordance with rotation of the motor.

In this way, it is possible to prevent an erroneous determination indicating that a noise in a bus current is large due to a steady noise that does not affects the accuracy of a current value. Moreover, it is possible to prevent an erroneous determination (namely, erroneous determination indicating that noise is small) indicating that even a large noise is a steady noise. Therefore, it is possible to precisely execute noise determination.

Moreover, the first extraction unit executes a filtering process on the basis of a motor current calculated during the last carrier period, a noise component extracted during the last carrier period, and a motor current calculated during a present carrier period to remove a non-noise component from the motor current and to extract a noise component included in the motor current from the motor current.

In this way, it is possible to further precisely extract a noise component.

Moreover, the motor control device according to the present disclosure further includes a second extraction unit (namely, second extraction unit 94 according to embodiments). The second extraction unit that outputs, in a case where the determination unit determines that the noise in the bus current is large during the last carrier period, a virtual motor current in which an effect due to the noise is reduced and a virtual noise component included in the virtual motor current to the first extraction unit during the present carrier period.

For example, the first extraction unit executes a filtering process by using a predetermined filter constant, and the second extraction unit executes a filtering process based on the virtual motor current by using a same filter constant as the predetermined filter constant in the first extraction unit to extract the virtual noise component included in the virtual motor current from the virtual motor current.

Moreover, for example, in a case where the determination unit determines that the noise in the bus current is large during the last carrier period, the first extraction unit replaces, during the present carrier period, the motor current calculated during the last carrier period and the noise component extracted during the last carrier period with the virtual motor current and the virtual noise component that are input from the second extraction unit during the present carrier period to execute the filtering process.

Moreover, for example, the second extraction unit adds a predetermined additional value to the motor current that is calculated during a last but one carrier period to calculate the virtual motor current. The predetermined additional value has a same sign as a sign of a noise component extracted by the first extraction unit, and an absolute value of the predetermined additional value is smaller than an absolute value of the threshold.

In this way, even in a case where the determination unit determines that a noise in a bus current is large during a present carrier period, it is possible to reduce oscillation of an output of the first extraction unit during the following carrier periods. Therefore, it is possible to prevent an erroneous determination indicating that a noise in a bus current is large even when a noise superposed on the bus current is small.

[Reference Signs List]

100　　Motor control device

10　　Inverter
21　　Current detector
61　　3φ current calculator
91　　First extraction unit

92    Noise amount determining unit
94    Second extraction unit

**Claims**

1.  A motor control device comprising:

    an inverter configured to:

        convert a direct-current voltage supplied from a direct-current power supply into an alternating-current voltage; and
        apply the alternating-current voltage to a motor;

    a detection unit configured to detect a bus current of the inverter by using a resistance connected between the direct-current power supply and the inverter;
    a calculation unit configured to calculate a motor current flowing through the motor based on the bus current;
    a first extraction unit configured to extract a noise component included in the motor current from the motor current; and
    a determination unit configured to determine a magnitude of a noise in the bus current based on the noise component.

2.  The motor control device according to claim 1, wherein
    the first extraction unit removes, from the motor current, a non-noise component that is different from the noise component to extract the noise component.

3.  The motor control device according to claim 1, wherein
    the determination unit is further configured to:

        in a case where the noise component is less than a threshold, determine that the noise in the bus current is small; and
        update the threshold based on the noise component in a case where determining that the noise in the bus current is small.

4.  The motor control device according to claim 3, wherein
    the determination unit updates the threshold based on a peak value of the noise component during a predetermined time interval in a case where determining that the noise in the bus current is small during the predetermined time interval.

5.  The motor control device according to claim 4, wherein
    the predetermined time interval is a load pulsation period that is a period during which a load of motor pulses in accordance with rotation of the motor.

6.  The motor control device according to claim 2, wherein
    the first extraction unit removes, from the motor current, a frequency component including a higher harmonic wave component, which depends on a rotational velocity of the motor, as the non-noise component to extract the noise component included in the motor current from the motor current.

7.  The motor control device according to claim 2, wherein
    the first extraction unit removes, from the motor current, a frequency component, which is caused by pulsation of a load of the motor, as the non-noise component to extract the noise component included in the motor current from the motor current.

8.  The motor control device according to claim 2, wherein
    the first extraction unit removes, from the motor current, an offset component, which is an average value of the motor current, as the non-noise component to extract the noise component included in the motor current from the motor current.

9.  The motor control device according to claim 2, wherein

the inverter applies the alternating-current voltage to the motor by PWM control,

in a case where the noise component is equal to or more than a threshold, the determination unit determines that the noise in the bus current is large,

the first extraction unit executes a filtering process based on the motor current that is calculated during a last carrier period, the noise component that is extracted during the last carrier period, and the motor current that is calculated during a present carrier period to remove the non-noise component from the motor current and to extract the noise component included in the motor current from the motor current, and

the motor control device further includes:

a second extraction unit configured to output, in a case where the determination unit determines that the noise in the bus current is large during the last carrier period, a virtual motor current in which an effect due to the noise is reduced and a virtual noise component included in the virtual motor current to the first extraction unit during the present carrier period.

10. The motor control device according to claim 9, wherein

the first extraction unit executes the filtering process by using a predetermined filter constant, and

the second extraction unit executes a filtering process based on the virtual motor current by using a same filter constant as the predetermined filter constant to extract the virtual noise component included in the virtual motor current from the virtual motor current.

11. The motor control device according to claim 9, wherein

in a case where the determination unit determines that the noise in the bus current is large during the last carrier period;

the first extraction unit replaces, during the present carrier period, the motor current calculated during the last carrier period and the noise component extracted during the last carrier period with the virtual motor current and the virtual noise component that are input from the second extraction unit during the present carrier period to execute the filtering process.

12. The motor control device according to claim 9, wherein

the second extraction unit adds a predetermined additional value to the motor current that is calculated during a last but one carrier period to calculate the virtual motor current,

the predetermined additional value has a same sign as a sign of a noise component extracted by the first extraction unit, and

an absolute value of the predetermined additional value is smaller than an absolute value of the threshold.

# FIG.1

# FIG.2

80a

NOISE DETERMINING UNIT

id_det

iq_det

91
FIRST
EXTRACTION
UNIT

id_no

iq_no

92
NOISE
AMOUNT
DETER-
MINING UNIT

DF

93
CURRENT
DECIDING
UNIT

id

iq

ωe

id_est iq_est

# FIG.3

91

FIRST EXTRACTION UNIT

id_det

iq_det

911
FIRST
NOTCH
FILTER

912
SECOND
NOTCH
FILTER

913
FIRST
HIGH-PASS
FILTER

id_no

iq_no

ωe

# FIG.4

AMPLI-
TUDE

OFFSET COMPONENT

LOAD
PULSATION
COMPONENT

MOTOR-STRUCTURE
CAUSED COMPONENT

NOISE
COMPONENT

FREQUENCY

# FIG.5

AMPLI-
TUDE

NOISE
COMPONENT

FREQUENCY

# FIG.6

# FIG.7

# FIG.8

EP 4 583 398 A1

# FIG.9

```
              ┌─────────────┐
              │    START    │
              └──────┬──────┘
                     │
                     ▼           ⟋S100
         ┌───────────────────────────┐
         │  EXTRACT NOISE COMPONENT  │
         └─────────────┬─────────────┘
                       │
                       ▼              ⟋S105
              ╱─────────────────╲
             ╱  |NOISE COMPONENT| ≥ ╲      NO
            ╱       |±THN|?          ╲──────────────┐
            ╲                       ╱                │
             ╲                     ╱                 │
              ╲───────────────────╱                 │
                     │ YES                           │
                     ▼        ⟋S110                  ▼          ⟋S125
         ┌───────────────────────┐        ┌───────────────────────┐
         │    FILTER INPUT=      │        │    FILTER INPUT=      │
         │  DETECTED CURRENT±a   │        │   DETECTED CURRENT    │
         └───────────┬───────────┘        └───────────┬───────────┘
                     │        ⟋S115                   │         ⟋S130
         ┌───────────────────────┐        ┌───────────────────────┐
         │   FILTERING PROCESS   │        │   FILTERING PROCESS   │
         └───────────┬───────────┘        └───────────┬───────────┘
                     │        ⟋S120                   │
         ┌───────────────────────┐                    │
         │  REPLACE FILTER DATA  │                    │
         └───────────┬───────────┘                    │
                     │◄───────────────────────────────┘
                     ▼
              ┌─────────────┐
              │     END     │
              └─────────────┘
```

## INTERNATIONAL SEARCH REPORT

| International application No. |
|---|
| **PCT/JP2023/029412** |

### A.    CLASSIFICATION OF SUBJECT MATTER

**H02P 21/14**(2016.01)i; **H02P 27/06**(2006.01)i
FI:    H02P21/14; H02P27/06

According to International Patent Classification (IPC) or to both national classification and IPC

### B.    FIELDS SEARCHED

Minimum documentation searched (classification system followed by classification symbols)

H02P21/14; H02P27/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2017-34897 A (TOSHIBA LIFESTYLE PRODUCTS & SERVICES CORP) 09 February 2017 (2017-02-09) paragraphs [0019]-[0040], fig. 1, 5-7 | 1-2, 6-8 |
| A | | 3-5, 9-12 |
| A | JP 2009-261101 A (JTEKT CORP) 05 November 2009 (2009-11-05) entire text, all drawings | 1-12 |
| A | JP 2008-86124 A (MITSUBISHI ELECTRIC CORP) 10 April 2008 (2008-04-10) entire text, all drawings | 1-12 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **01 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/029412**

| Patent document cited in search report | | | Publication date (day/month/year) | Patent family member(s) | Publication date (day/month/year) |
|---|---|---|---|---|---|
| JP | 2017-34897 | A | 09 February 2017 | (Family: none) | |
| JP | 2009-261101 | A | 05 November 2009 | (Family: none) | |
| JP | 2008-86124 | A | 10 April 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015126555 A